# EUROPÄISCHE PATENTSCHRIFT

(11) **EP 0 539 785 B1**
(45) Veröffentlichungstag und Bekanntmachung des Hinweises auf die Patenterteilung: **17.05.1995**
(21) Anmeldenummer: 92117286.2
(22) Anmeldetag: 09.10.1992
(51) Int. Cl.: B60Q 1/068, B60Q 1/04

(54) **Justierbare Befestigungsvorrichtung**
Adjustable fixation device
Dispositif de fixation ajustable

(30) Priorität: 30.10.1991 DE 4135773
(43) Veröffentlichungstag der Anmeldung: 05.05.1993
(73) Patentinhaber: Hella KG Hueck & Co., 59552 Lippstadt (DE)
(72) Erfinder: Pokraka, Gerd, W-4780 Lippstadt (DE); Goldschmidt, Karol, W-4780 Lippstadt (DE); Schäfers, Franz, W-4790 Paderborn (DE)

(56) Entgegenhaltungen:
- EP-A- 0 129 922
- FR-A- 1 414 007

## Beschreibung

Die Erfindung bezieht sich auf eine justierbare Befestigungsvorrichtung für eine Fahrzeugleuchte, welche in eine Karosserieöffnung an der Frontseite oder am Heck eines Fahrzeugs einbaubar ist und welche durch eine Schraubenverbindung mit einem Wandungsabschnitt eines aus Kunststoff hergestellten Tragelements an einem Karosserieteil unverstellbar festsetzbar ist, mit folgenden Merkmalen:
- für den Befestigungsbolzen der Schraubenverbindung ist eine Befestigungsöffnung in den Wandungsabschnitt des Tragelements eingebracht und eine an einer Seitenfläche des Wandungsabschnitts anliegende metallische Unterlegscheibe mit einer zentralen Öffnung vorgesehen,
- eine Seitenfläche des Wandungsabschnitts weist eine Nut auf, in deren Grund die Befestigungsöffnung eingebracht ist und deren sich zugewandte Flächenabschnitte im Bereich der Befestigungsöffnung parallel zueinander verlaufen.

Eine solche Befestigungsvorrichtung ist aus der DE-A-3 726 834 für eine Blinkleuchte bekannt, welche neben einer Fahrzeugleuchte für das Abblendlicht in einer Karosserieöffnung in der Vorderseite des Fahrzeugs angeordnet ist Die Blinkleuchte ist nach dem festsetzen der Fahrzeugleuchte für das Abblendlicht seitlich neben der Fahrzeugleuchte in die verbleibende Karosserieöffnung einsetzbar. Das aus Kunststoff bestehende Tragelement ist schalenförmig ausgeführt und trägt mit seinem vorderen umlaufenden Rand die Lichtscheibe, deren äußerer Oberflächenverlauf an die an sie angrenzende Außenkontur des Fahrzeugs angepaßt ist. An die Rückseite des schalenförmigen Tragelements ist eine in Einsetzrichtung der Blinkleuchte weisende Fahne angeformt, welche im Querschnitt U-förmig gestaltet ist. Dadurch weist der Flansch eine hohe Biegesteifigkeit auf. In den Endabschnitt des Flansches ist zwischen die Schenkel seiner U-Form die Befestigungsöffnung eingebracht. Die Befestigungsöffnung ist als Längsschlitz ausgeführt, welcher zum freien Ende des Flansches hin geöffnet ist. Die Schraubverbindung besteht aus einem Befestigungsbolzen, welcher zwischen den Schenkeln der U-Form des Flansches mit seinem Kopf bei zwischengeschalteter Unterlegscheibe an dem Flansch anliegt und mit seinem Gewindeschaft durch den Längsschlitz hindurchgeht und in eine Mutter des Karosserieteils eingreift. Entsprechend der Länge des Längsschlitzes in dem Flansch kann die Blinkleuchte in Einsetzrichtung verstellt werden, bis die äußere Oberfläche der Lichtscheibe der an die Lichtscheibe angrenzenden Außenkontur der Karosserie angepaßt ist. Damit vor dem Festsetzen der Schraubenverbindung die Blinkleuchte sich nicht wieder verstellt, bestehen zwischen dem aus Kunststoff hergestellten Tragelement und der Karosserie zusätzliche separate Halteelemente, welche ratschenartig zusammenwirken.

Aus der DE-C-3 540 724 und aus der EP-A-0 239 440 ist eine justierbare Befestigungsvorrichtung einer Fahrzeugleuchte für Abblendlicht bekannt, welche außer der Schraubenverbindung und der Unterlegscheibe zusätzliche separate Teile aufweist, um die Fahrzeugleuchte bei gelöster Schraubenverbindung ratschenartig einstellen zu können.

Aufgabe der Erfindung ist es, die im Oberbegriff des Anspruchs 1 beschriebene justierbare Befestigungsvorrichtung derart zu gestalten, daß sie außer der Schraubenverbindung und der Unterlegscheibe keine separaten Teile aufweisen muß und trotzdem die Fahrzeugleuchte vor dem Festdrehen der Schraubenverbindung mit ihrem Tragelement gegenüber der an die Karosserieöffnung angrenzenden Außenkontur des Fahrzeugs in einer bestimmten Richtung ausgerichtet werden kann und in dieser Stellung gehalten ist, bis die Schraubenverbindung festgedreht ist. Diese Aufgabe wird nach der Erfindung dadurch gelöst, daß
- bei gelöster Schraubenverbindung sowohl der Befestigungsbolzen an dem Karosserieteil als auch die Unterlegscheibe an dem Befestigungsbolzen in Längsausdehnung der Nut weitgehend spielfrei gehalten ist,
- in Längsausdehnung der Nut die Befestigungsöffnung des Wandungsabschnitts größer ausgeführt ist als die zentrale Öffnung der Unterlegscheibe,
- bei gelöster Schraubenverbindung die Unterlegscheibe mit schmalen Seitenflächen an den sich zugewandten und parallel zueinander verlaufenden Flächenabschnitten der Nut anliegt, wobei an den Anlageflächen ein solcher Kraft- und/oder Formschluß besteht, daß beim Einstellen der Fahrzeugleuchte die Unterlegscheibe ab einer bestimmten Mindestkraft in Längsausdehnung der Nut verschiebbar ist.

Bei einer solchen Lösung ist die Fahrzeugleuchte kurz vor dem Festdrehen der Schraubenverbindung in Längsausdehnung der Nut verstellbar und in jeder Stellung über die Unterlegscheibe und den Befestigungsbolzen an der Karosserie gehalten. Außerdem ist weiterhin vorteilhaft, daß die Fahrzeugleuchte gegenüber der Außenkontur einer an sie angrenzenden Motorraumklappe bzw. Kofferraumklappe ausgerichtet werden kann, obwohl die Schraubenverbindung erst nach dem Öffnen der Motorraum- bzw. Kofferraumklappe zugänglich ist. Nach dem Festdrehen der Schraubenverbindung ist die Unterlegscheibe nicht mehr relativ zum Wandungsabschnitt des Tragelements verschiebbar.

Weiterhin ist es auch vorteilhaft, wenn die Außenabmessung der zentralen Öffnung der Unterlegscheibe in Längsausdehnung der Nut der Außenabmessung des durch sie hindurchgehenden Abschnitts des Befestigungsbolzens entspricht und der Befestigungsbolzen durch eine Karosserieöffnung des Karosserieteils hindurchgeht, deren Außenabmessung der Außenabmessung des durch sie hindurchgehenden Abschnitts des Befestigungsbolzens entspricht. Eine solche Lösung ist einfach und kostengünstig herstellbar.

Vorteilhaft ist es weiterhin, wenn der Befestigungsbolzen mit seinem aus der Karosserieöffnung herausragenden Endabschnitt eines Gewindeschaftes in eine Mutter eingeschraubt ist, welche ortsfest mit dem Karosserieteil verbunden ist. Hierbei ist es zweckmäßig, wenn die Mutter entweder durch ein in die Karossieöffnung des Karosserieteils eingebrachtes Innengewinde gebildet ist oder bei einem aus Blech hergestellten Karosserieteil, z. B. eine Schweißmutter ist, welche an dem Karosserieteil angeschweißt ist. Dadurch kann beim Justieren der Fahrzeugleuchte der Befestigungsbolzen gegenüber dem Karosserieteil nicht kippen.

Ein weiterer Vorteil ist es, wenn die Unterlegscheibe in ihren Außenabmessungen rechteckförmig gestaltet ist und mit zwei parallel zueinander verlaufenden schmalen Seitenflächen an den sich zugewandten Flächenabschnitten der Nut anliegt. Bei einer solchen Lösung ist die Unterlegscheibe gegen ein Verdrehen um die Längsachse des Befestigungsbolzens sicher an den Wandungsabschnitt des Tragelements gehalten.

Von Vorteil ist es weiterhin, wenn die Unterlegscheibe mindestens einen elastisch nachgiebigen Randabschnitt aufweist, welcher an einem der sich zugewandten Flächenabschnitte der Nut unter Vorspannung anliegt, wobei der andere Flächenabschnitt der Nut das Widerlager ist. Dadurch ist die Fahrzeugleuchte kurz vor dem Festdrehen der Schraubenverbindung der Fahrzeugleuchte sowohl leicht gegenüber der Karosserie einstellbar als auch in der eingestellten Lage sicher gehalten. Hierbei ist es zweckmäßig, wenn die Unterlegscheibe an beiden Flächenabschnitten der Nut mit jeweils einem elastisch nachgiebigen Abschnitt unter Vorspannung anliegt.

Außerdem ist es vorteilhaft, wenn der elastisch nachgiebige Abschnitt der Unterlegscheibe durch einen in Längsausdehnung der Nut verlaufenden federnden Arm gebildet ist, welcher mit seinem freien Endabschnitt federnd an einem der sich zugewandten Flächenabschnitte der Nut anliegt, welcher durch einen in die Unterlegscheibe angebrachten Schlitz gebildet ist, welcher in Längsausdehnung der Nut verläuft und zu einem Rand der Unterlegscheibe hin geöffnet ist. Dadurch sind weder für die Herstellung der sich zugewandten Flächenabschnitte der Nut noch für Herstellung der an diesen Flächenabschnitten anliegenden schmalen Seitenflächen der Unterlegscheibe enge Toleranzen notwendig und trotzdem ist die Fahrzeugleuchte nach ihrem Einstellen über die Unterlegscheibe an dem Karosserieteil sicher gehalten.

Ferner ist es vorteilhaft, wenn mindestens einer der sich zugewandten Flächenabschnitte der Nut mit Verrastungsmarken versehen ist, in welche die Unterlegscheibe mit einer entsprechend den Verrastungsmarken gestalteten Nase eingreift, wobei die Verrastungsmarken in Längsausdehnung der Nut hintereinander angeordnet sind. Hierbei ist es zweckmäßig, wenn die Verrastungsmarken die Zwischenräume von in Längsausdehnung der Nut hintereinander angeordneten Zähnen sind. Dadurch ist die Unterlegscheibe in der Nut und somit auch die Fahrzeugleuchte in Längsausdehnung der Nut ratschenartig verschiebbar.

Ebenfalls ist es vorteilhaft, wenn die Nase der Unterlegscheibe mit ihren in die schmalen Seitenflächen der Unterlegscheibe übergehenden Abschnitten, sich zu ihrem freien Ende hin konisch verjüngt und quer zur Anlagefläche der Unterlegscheibe gesehen, an ihrem freien Ende abgerundet ist, während sie zur Unterlegscheibe hin mit einem Bogen in die an sie angrenzende schmale Seitenfläche der Unterlegscheibe übergeht. Dadurch ist ein leichtes Verschieben der Unterlegscheibe möglich ohne die Verrastungsmarken zu beschädigen.

Bei einer anderen vorteilhaften Weiterbildung der Erfindung, weist mindestens einer der sich zugewandten Flächenabschnitte der Nut einen elastisch nachgiebigen Abschnitt auf, an welchen die Unterlegscheibe mit einer schmalen Seitenfläche gedrückt anliegt. Hierbei ist es zweckmäßig, wenn der elastisch nachgiebige Abschnitt von mindestens einer quer zur Anlagefläche der Unterlegscheibe verlaufenden Rippe gebildet ist. Bei einer solchen Lösung ist es möglich, eine im Handel erhältliche Unterlegscheibe zu verwenden.

Weiterhin ist es vorteilhaft, wenn die Unterlegscheibe ein Schenkel eines quer zu seiner Längsausdehnung U-förmig gebogenen Blechstreifens ist, welcher auf den Wandungsabschnitt aufgeschoben ist und mit seinen Schenkeln federnd an den sich abgewandten breiten Seiten des Wandungsabschnitts anliegt. Hierbei ist es zweckmäßig, wenn der als Unterlegscheibe dienende Schenkel des U-förmigen Blechstreifens am Grund der Nut anliegt und der andere Schenkel zwischen dem Wandungsabschnitt des Trägerelements und dem Karosserieteil angeordnet ist. Dadurch ist die Unterlegscheibe auch vor der Montage der Schraubenverbindung verliersicher an dem Wandungsabschnitt des Trägerelements gehalten.

Ein weiterer Vorteil ist es, wenn der U-förmige Blechstreifen an seiner Biegelinie einen geschwächten Querschnitt aufweist. Dadurch ist ein leichtes Aufschieben des U-förmigen Blechstreifens auf den Wandungsabschnitt des Trägerelements möglich.

Ein weiterer Vorteil ist es, wenn der die Unterlegscheibe bildende Schenkel des U-förmigen Blechstreifens an seinem freien Ende einen vom Wandungsabschnitt weggebogenen Randabschnitt aufweist, dessen dem Wandungsabschnitt zugewandte Seitenfläche als Auflaufschräge dient. Eine solche Auflaufschräge dient beim Aufschieben des U-förmigen Blechstreifens auf den Wandungsabschnitt als Einfädelungshilfe. Der Befestigungsbolzen geht durch eine Öffnung des an dem Karosserieteil anliegenden Schenkels des U-förmigen Blechteils hindurch, deren Außenabmessungen den Außenabmessungen der Öffnung des als Unterlegscheibe dienenden Schenkels entsprechen.

Außerdem ist es vorteilhaft, wenn der Befestigungsbolzen in Längsausdehnung der Nut sowohl in der Öffnung des als Unterlegscheibe dienenden Schenkels als auch in der Öffnung des anderen Schenkels spielfrei gehalten ist. Dadurch kann der Befestigungsbolzen beim Verstellen der Fahrzeugleuchte nicht seitlich wegkippen.

Ebenfalls ist es vorteilhaft, wenn die Längsausdehnung der Nut in der Einsetzrichtung verläuft, in welcher die Fahrzeugleuchte in die Karosserieöffnung einsetzbar ist. Eine solche Ausführungsform ist besonders vorteilhaft, da durch sie nach dem Justieren der Fahrzeugleuchte keine vorstehenden Kanten zwischen der Vorderseite der Lichtscheibe und der an die Lichtscheibe angrenzenden Außenkontur der Fahrzeugkarosserie mehr bestehen. Außerdem ist es vorteilhaft, wenn die zentrale Öffnung der Unterlegscheibe ein Längsschlitz ist, welcher in seiner Längsausdehnung quer zur Längsausdehnung der Nut verläuft, und wenn die Befestigungsöffnung in dem Wandungsabschnitt bei jeder möglichen Stellung der Unterlegscheibe quer zur Längsausdehnung der Nut so lang ausgeführt ist, wie der Längsschlitz der Unterlegscheibe. Eine solche Ausführungsform sollte nur an einem einzigen Befestigungspunkte zwischen dem Tragelement der Fahrzeugleuchte und der Karosserie verwendet werden, um die Toleranz zu den anderen Befestigungspunkten hin ausgleichen zu können.

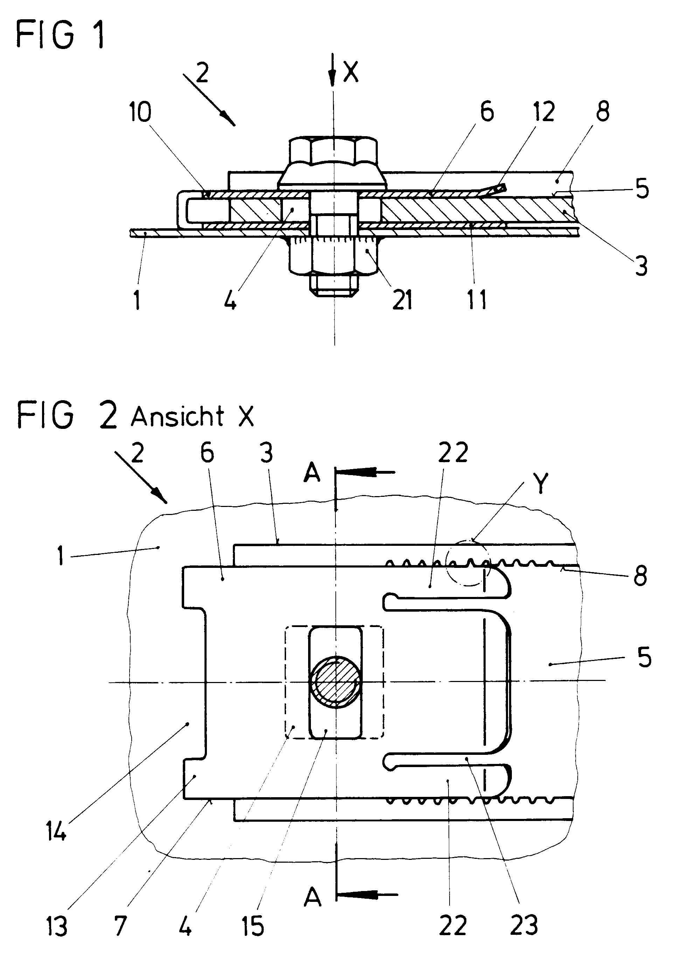

Ein Ausführungsbeispiel der Erfindung ist in der Zeichnung dargestellt und zwar zeigt
Figur 1 einen Mittelschnitt durch eine justierbare Befestigungsvorrichtung einer Fahrzeugleuchte für Abblendlicht, welche in eine Karosserieöffnung auf der Vorderseite eines Fahrzeugs eingebaut ist,
Figur 2 eine Ansicht aus Richtung X auf die justierbare Befestigungsvorrichtung,

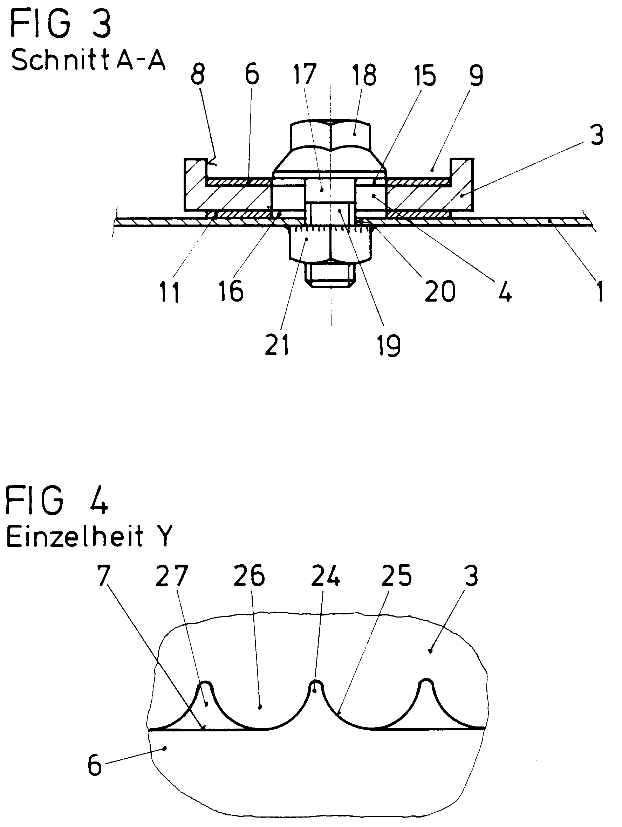

Figur 3 einen Schnitt nach der Linie A-A durch die Befestigungsvorrichtung und
Figur 4 einen Ausschnitt Y der Befestigungsvorrichtung in vergrößertem Maßstab.

Die in den Figuren dargestellte justierbare Befestigungsvorrichtung (2) dient als ein Befestigungspunkt von insgesamt drei Befestigungspunkten zwischen einer Fahrzeugleuchte (nicht dargestellt) und einem ortsfesten Karosserieteil (1). Die Fahrzeugleuchte besteht im wesentlichen aus einem aus Kunststoff hergestellten schalenförmigen Gehäuse, einer mit dem umlaufenden Rand des Gehäuses verbundenen Lichtscheibe und einem in das Gehäuse eingesetzten Reflektor. Die Fahrzeugleuchte ist in einer nicht dargestellten Karosserieöffnung auf der Vorderseite des Fahrzeugs eingesetzt und der Oberflächenverlauf ihrer Lichtscheibe ist dem Verlauf der an die Lichtscheibe angrenzenden Außenkontur der Karosserie angepaßt. Zwischen der Vorderseite der Lichtscheibe und der Motorhaube, welche sich bis zur Lichtscheibe hin erstreckt, sind die Toleranzen größer als zwischen der Lichtscheibe und den nichtverstellbaren Karosserieteilen. Aus diesem Grund ist an der Rückseite des Scheinwerfers die justierbare Befestigungsvorrichtung (2) angeordnet, durch welche es möglich ist, die Vorderseite der Lichtscheibe zur Außenkontur der Motorraumklappe genau einzustellen. Ein solches Einstellen der Fahrzeugleuchte ist bei geschlossener Motorraumklappe möglich. Hierbei muß nach dem Einsetzen der Fahrzeugleuchte in die Karosserieöffnung die Lichtscheibe etwas aus der Karosserieöffnung herausragen, damit die Fahrzeugleuchte bei geschlossener Motorraumklappe soweit in die Karosserieöffnung hineingeschoben werden kann, bis die Vorderseite der Lichtscheibe etwa absatzlos in die Außenkontur der Motorraumklappe übergeht. Die Befestigungspunkte zwischen der Fahrzeugleuchte und der Karosserie im Bereich der nichtverstellbaren Karosserieteile müssen nicht durch justierbare Befestigungsvorrichtungen hergestellt sein, da wie vorstehend schon erwähnt, zwischen Fahrzeugleuchte und diesen nichtverstellbaren Karosserieteilen kleinere Toleranzen bestehen.

Die justierbare Befestigungsvorrichtung (2) weist den an die Rückseite des schalenförmigen Gehäuses angeformten Wandungsabschnitt (3) auf, welcher als Fahne ausgeführt ist und in Einsetzrichtung der Fahrzeugleuchte weist. Die Fahne (3) ist in ihrem Querschnitt U-förmig gestaltet. In den freien Endabschnitt des Flansches (3) ist mittig zwischen die Schenkel der U-Form die rechteckförmige Befestigungsöffnung (4) eingebracht. An dem Grund (5) der durch die U-Form des Flansches (3) gebildeten Nut (9) liegt die rechteckförmige Unterlegscheibe (6) an. Die rechteckförmige Unterlegscheibe (6) liegt mit ihren langen schmalen Seitenflächen (7) an den sich zugewandten Flächenabschnitten (8) der Nut (9) an. Die Unterlegscheibe (6) ist ein Schenkel des quer zu seiner Längsausdehnung U-förmig gebogenen Blechstreifens (10). Der andere Schenkel (11) des Blechstreifens (10) ist zwischen dem Wandungsabschnitt (3) des Gehäuses und dem Karosserieteil (1) angeordnet.

Der Schenkel (6) weist an seinem freien Ende den von dem Wandungsabschnitt (3) weggebogenen Randabschnitt (12) auf, dessen dem Wandungsabschnitt (3) zugewandte Seitenfläche als Auflaufschräge dient. Diese Auflaufschräge erleichtert das Aufschieben des U-förmigen Blechstreifens (10) von der Rückseite des Scheinwerfers her auf den Wandungsabschnitt (3). Hierbei liegen die Schenkel (6) und (11) federnd an dem Wandungsabschnitt (3) und somit ist der U-förmige Blechstreifen nach seinem Aufschieben auf den Wandungsabschnitt (3) verliersicher mit der Fahrzeugleuchte verbunden, bis diese an der Karosserie befestigt ist. Der die Schenkel (6) und (11) verbindende mittlere Steg (13) ist durch eine in den Steg eingestanzte zentrale Öffnung (14) geschwächt. Dadurch ist die Federkraft der Schenkel (6) und (11) des U-förmigen Blechstreifens so klein, daß der U-förmige Blechstreifen mit einem geringeren Kraftaufwand auf den Wandungsabschnitt (3) aufgeschoben werden kann. In den Schenkeln (6) und (11) des U-förmigen Blechstreifens (10) sind zentral die Öffnungen (15) und (16) eingebracht, welche übereinanderliegen und dieselben Außenabmessungen aufweisen. Durch die Öffnungen (15) und (16) des U-förmigen Blechstreifens (10) und die Befestigungsöffnung (4) des Wandungsabschnitts (3) geht der Befestigungsbolzen (17) hindurch. An der nach außen gerichteten Fläche der Unterlegscheibe (6) liegt der Befestigungsbolzen (17) mit dem Schraubenkopf (18) an, während sein Gewindeschaft (19) durch die Karosserieöffnung (20) hindurchgeht und mit seinem Endabschnitt in die Mutter (21) eingeschraubt ist. Die Mutter (21) ist eine Schweißmutter, welche mit dem aus Blech bestehenden Karosserieteil (1) verschweißt ist. Die Öffnungen (15) und (16) der beiden Schenkel des U-förmigen Blechstreifens (10) sind als Längsschlitz ausgeführt, welcher in seiner Längsausdehnung quer zur Längsausdehnung der Nut (9) verläuft. Die Längsschlitze (15) und (16) entsprechen in ihrer Breite dem Außendurchmesser des durch sie hindurchgehenden Befestigungsbolzens und sind etwa so lang ausgeführt, daß ihre kurzen schmalen Seitenflächen mit den ihnen benachbarten Seitenflächen der Befestigungsöffnung (4) des Wandungsabschnitts (3) fluchten. Die Abmessung der Befestigungsöffnung (4) ist in Längsausdehnung der Nut wesentlich größer ausgeführt als die Abmessungen der Längsschlitze (15) und (16). Der Schenkel (6) des U-förmigen Blechstreifens liegt an seinem freien Endabschnitt jeweils mit dem elastischen Abschnitt (22) an den sich zugewandten Flächenabschnitten (8) der Nut (9) unter Vorspannung an. Die elastischen Abschnitte (22) sind federnde Arme, welche in Aufsetzrichtung des U-förmigen Blechstreifens (10) weisen und durch die in die Unterlegscheibe eingebrachten Längsschlitze (23) gebildet sind. Die federnden Arme weisen an ihrer schmalen Seitenfläche (7) die angeformte Nase (24) auf, mit welcher sie in entsprechend der Nase geformte Verrastungsmarken (27) der Flächenabschnitte (8) der Nut (9) rastend eingreifen. Quer zur Anlagefläche der Unterlegscheibe (6) gesehen verjüngt sich die Nase (24) zu ihrem freien Ende hin und ist an diesem angerundet, während sie zur Unterlegscheibe (6) hin mit dem Bogen (25) in die schmale Seitenfläche (7) des federnden Arms (22) übergeht. Die Verrastungsmarken (27) sind durch die Zwischenräume von in Längsausdehnung der Nut (9) hintereinander angeordneten Zähnen (26) gebildet, mit welchen die Flächenabschnitte (8) versehen sind. Die Unterlegscheibe (6) liegt mit einer so großen Fläche an dem Wandungsabschnitt (3) an, daß sie nach dem Festdrehen der Schraubenverbindung nicht mehr gegenüber dem Wandungsabschnitt (3) verschiebbar ist.

## Patentansprüche

1. Justierbare Befestigungsvorrichtung für eine Fahrzeugleuchte, welche in eine Karosserieöffnung an der Frontseite oder am Heck eines Fahrzeugs einbaubar ist und welche durch eine Schraubenverbindung mit einem Wandungsabschnitt (3) eines aus Kunststoff hergestellten Tragelements an einem Karosserieteil unverstellbar festsetzbar ist, mit folgenden Merkmalen:
- für den Befestigungsbolzen (17) der Schraubenverbindung ist eine Befestigungsöffnung (4) in den Wandungsabschnitt (3) des Tragelements eingebracht und eine an einer Seitenfläche des Wandungsabschnitts (3) anliegende metallische Unterlegscheibe (6) mit einer zentralen Öffnung (15) vorgesehen,
- eine Seitenfläche des Wandungsabschnitts (3) weist eine Nut (9) auf, in deren Grund (5) die Befestigungsöffnung (4) eingebracht ist und deren sich zugewandte Flächenabschnitte (8) im Bereich der Befestigungsöffnung (4) parallel zueinander verlaufen,
dadurch gekennzeichnet, daß
- bei gelöster Schraubenverbindung sowohl der Befestigungsbolzen (17) an dem Karosserieteil (1) als auch die Unterlegscheibe (6) an dem Befestigungsbolzen (17) in Längsausdehnung der Nut (9) weitgehend spielfrei gehalten ist,
- in Längsausdehnung der Nut (9) die Befestigungsöffnung (4) des Wandungsabschnitts (3) größer ausgeführt ist als die zentrale Öffnung (15) der Unterlegscheibe (6),
- bei gelöster Schraubenverbindung die Unterlegscheibe (6) mit schmalen Seitenflächen (7) an den sich zugewandten und parallel zueinander verlaufenden Flächenabschnitten (8) der Nut (9) anliegt, wobei an den Anlageflächen (8) ein solcher Kraft- und/oder Formschluß besteht, daß beim Einstellen der Fahrzeugleuchte die Unterlegscheibe (6) ab einer bestimmten Mindestkraft in Längsausdehnung der Nut (9) verschiebbar ist.

2. Justierbare Befestigungsvorrichtung nach Anspruch 1, dadurch gekennzeichnet, daß die Außenabmessung der zentralen Öffnung (15) der Unterlegscheibe (6) in Längsausdehnung der Nut (9) der Außenabmessung des durch sie hindurchgehenden Abschnitts des Befestigungsbolzens (17) entspricht.

3. Justierbare Befestigungsvorrichtung nach Anspruch 1 oder 2, dadurch gekennzeichnet, daß der Befestigungsbolzen (17) durch eine Karosserieöffnung (20) des Karosserieteils (1) hindurchgeht, deren Außenabmessung der Außenabmessung des durch sie hindurchgehenden Abschnitts des Befestigungsbolzens (17) entspricht.

4. Justierbare Befestigungsvorrichtung nach einem der Ansprüche 1 bis 3, dadurch gekennzeichnet, daß der Befestigungsbolzen (17) mit seinem aus der Karosserieöffnung (20) herausragenden Endabschnitt seines Gewindeschaftes (19) in eine Mutter (21) eingeschraubt ist, welche ortsfest mit dem Karosserieteil (1) verbunden ist, wobei die Mutter (21) durch ein in die Karosserieöffnung (20) des Karosserieteils (1) eingebrachtes Innengewinde gebildet ist oder bei einem aus Blech hergestellten Karosserieteil (1) die Mutter (21) eine Schweißmutter ist, welche an dem Karosserieteil (1) angeschweißt ist.

5. Justierbare Befestigungsvorrichtung nach einem der Ansprüche 1 bis 4, dadurch gekennzeichnet, daß die Unterlegscheibe (6) in ihren Außenabmessungen rechteckförmig gestaltet ist und mit zwei parallel zueinander verlaufenden schmalen Seitenflächen (7) an den sich zugewandten Flächenabschnitten (8) der Nut (9) anliegt.

6. Justierbare Befestigungsvorrichtung nach einem der vorstehenden Ansprüche 1 bis 5, dadurch gekennzeichnet, daß die Unterlegscheibe (6) mindestens einen elastisch nachgiebigen Randabschnitt (22) aufweist, welcher an einem der sich zugewandten Flächenabschnitte (8) der Nut (9) unter Vorspannung anliegt, wobei der andere Flächenabschnitt (8) der Nut (9) das Widerlager ist.

7. Justierbare Befestigungsvorrichtung nach Anspruch 6, dadurch gekennzeichnet, daß die Unterlegscheibe (6) an beiden Flächenabschnitten (8) der Nut (9) mit jeweils einem elastisch nachgiebigen Abschnitt (22) unter Vorspannung anliegt.

8. Justierbare Befestigungsvorrichtung nach Anspruch 6 oder 7, dadurch gekennzeichnet, daß der elastisch nachgiebige Abschnitt (22) der Unterlegscheibe (6) durch einen in Längsausdehnung der Nut (9) verlaufenden federnden Arm gebildet ist, welcher mit seinem freien Endabschnitt federnd an einem der sich zugewandten Flächenabschnitte (8) der Nut (9) anliegt und daß der federnde Arm (22) durch einen in die Unterlegscheibe (6) eingebrachten Schlitz (23) gebildet ist, welcher in Längsausdehnung der Nut (9) verläuft und zu einem Rand der Unterlegscheibe (6) hin geöffnet ist.

9. Justierbare Befestigungsvorrichtung nach einem der Ansprüche 1 bis 8, dadurch gekennzeichnet, daß mindestens einer der sich zugewandten Flächenabschnitte (8) der Nut (9) mit Verrastungsmarken (27) versehen ist, in welche die Unterlegscheibe (6) mit einer Nase (24) federnd eingreift, wobei die Verrastungsmarken (27) entsprechend der Nase (24) gestaltet sind und in Längsausdehnung der Nut (9) gesehen, hintereinander angeordnet sind.

10. Justierbare Befestigungsvorrichtung nach Anspruch 9, dadurch gekennzeichnet, daß die Nase (24) der Unterlegscheibe (6) mit ihren in die schmalen Seitenflächen (7) der Unterlegscheibe (6) übergehenden Abschnitten, sich zu ihrem freien Ende hin konisch verjüngt und quer zur Anlagefläche der Unterlegscheibe (6) gesehen, an ihrem freien Ende abgerundet ist und zur Unterlegscheibe (6) hin mit einem Bogen (25) in die angrenzende schmale Seitenfläche (7) der Unterlegscheibe (6) übergeht.

11. Justierbare Befestigungsvorrichtung nach einem der Ansprüche 1 bis 10, dadurch gekennzeichnet, daß die Unterlegscheibe (6) ein Schenkel eines quer zu seiner Längsausdehnung U-förmig gebogenen Blechstreifens (10) ist, welcher auf den Wandungsabschnitt (3) aufgeschoben ist und mit seinen Schenkeln (6 und 11) federnd an den sich abgewandten breiten Seitenflächen des Wandungsabschnitts (3) anliegt.

12. Justierbare Befestigungsvorrichtung nach Anspruch 11, dadurch gekennzeichnet, daß der als Unterlegscheibe dienende Schenkel (6) des U-förmigen Blechstreifens (10) am Grund (5) der Nut (9) anliegt und der andere Schenkel (11) zwischen dem Wandungsabschnitt (3) des Trägerelements und dem Karosserieteil (1) angeordnet ist.

13. Justierbare Befestigungsvorrichtung nach Anspruch 11 oder 12, dadurch gekennzeichnet, daß der U-förmige Blechstreifen (10) an seiner Biegelinie einen geschwächten Querschnitt aufweist.

14. Justierbare Befestigungsvorrichtung nach einem der Ansprüche 1 bis 13, dadurch gekennzeichnet, daß der die Unterlegscheibe bildende Schenkel (6) des U-förmigen Blechstreifens (10) einen an seinem freien Ende vom Wandungsabschnitt (3) weggebogenen Randabschnitt (12) aufweist, dessen dem Wandungsabschnitt (3) zugewandte Seitenfläche als Auflaufschräge dient.

15. Justierbare Befestigungsvorrichtung nach einem der vorstehenden Ansprüche 11 bis 14, dadurch gekennzeichnet, daß der Befestigungsbolzen (17) durch eine Öffnung (16) des an dem Karosserieteil (1) anliegenden Schenkels (11) des U-förmigen Blechteils (10) hindurchgeht, deren Außenabmessungen den Außenabmessungen der Öffnung (15) des als Unterlegscheibe dienenden Schenkels (6) entsprechen.

16. Justierbare Befestigungsvorrichtung nach einem der vorstehenden Ansprüche 11 bis 15, dadurch gekennzeichnet, daß der Befestigungsbolzen (17) in Längsausdehnung der Nut (9) sowohl in der Öffnung (15) des als Unterlegscheibe dienenden Schenkels (6) als auch in der Öffnung (16) des anderen Schenkels spielfrei gehalten ist.

17. Justierbare Befestigungsvorrichtung nach einem der vorstehenden Ansprüche 1 bis 16, dadurch gekennzeichnet, daß die Längsausdehnung der Nut (9) in der Einsetzrichtung verläuft, in welcher die Fahrzeugleuchte in die Karosserieöffnung einsetzbar ist.

18. Justierbare Befestigungsvorrichtung nach einem der vorstehenden Ansprüche 1 bis 17, dadurch gekennzeichnet, daß die zentrale Öffnung (15) der Unterlegscheibe (6) ein Längsschlitz ist, welcher in seiner Längsausdehnung quer zur Längsausdehnung der Nut (9) verläuft.

19. Justierbare Befestigungsvorrichtung nach Anspruch 18, dadurch gekennzeichnet, daß die Befestigungsöffnung (4) in dem Wandungsabschnitt (3) bei jeder möglichen Stellung der Unterlegscheibe (6) quer zur Längsausdehnung der Nut (9) so lang ausgeführt ist, wie der Längsschlitz (15) der Unterlegscheibe (6).

## Claims

1. Adjustable fixing device for a vehicle lamp which can be fitted into a body opening on the front side or on the rear of a vehicle and which can be fastened non-adjustably to a body section by means of a bolted connection to a wall portion (3) of a supporting element made of plastic, having the following features:
- for the fixing bolt (17) of the bolted connection a fixing opening (4) is made in the wall portion (3) of the supporting element and a metallic washer (6), which bears against a side surface of the wall portion (3), is provided with a central opening (15),
- one side surface of the wall portion (3) has a groove (9), in the base (5) of which the fixing opening (4) is made and the mutually facing surface portions (8) of which run parallel to each other in the region of the fixing opening (4),
characterized in that
- when the bolted connection is undone both the fixing bolt (17) on the body section (1) and also the washer (6) on the fixing bolt (17) are held in the longitudinal extent of the groove (9) in a manner which is largely free from play,
- in the longitudinal extent of the groove (9) the fixing opening (4) of the wall portion (3) is designed larger than the central opening (15) of the washer (6),
- when the bolted connection is undone the washer (6) bears with narrow side surfaces (7) against the mutually facing and parallel surface portions (8) of the groove (9), there being such a friction fit and/or form fit at the bearing surfaces (8) that as the vehicle lamp is being adjusted the washer (6) can be displaced, following a certain minimum force, in the longitudinal extent of the groove (9).

2. Adjustable fixing device according to Claim 1, characterized in that the external dimensions of the central opening (15) of the washer (6) in the longitudinal extent of the groove (9) correspond to the external dimensions of that portion of the fixing bolt (17) which passes through it.

3. Adjustable fixing device according to Claim 1 or 2, characterized in that the fixing bolt (17) passes through a body opening (20) of the body section (1), the external dimensions of which opening correspond to the external dimensions of that portion of the fixing bolt (17) which passes through it.

4. Adjustable fixing device according to one of Claims 1 to 3, characterized in that the fixing bolt (17) is screwed by its end portion, which protrudes out of the body opening (20), of its threaded shank (19) into a nut (21) which is connected in a fixed manner to the body section (1), the nut (21) being formed by an internal thread made in the body opening (20) of the body section (1) or, when the body section (1) is made of sheet metal, the nut (21) is a welding rut which is welded to the body section (1).

5. Adjustable fixing device according to one of Claims 1 to 4, characterized in that in its external dimensions the washer (6) is of rectangular design and bears with two narrow side surfaces (7) running parallel to each other against the mutually facing surface portions (8) of the groove (9).

6. Adjustable fixing device according to one of the above Claims 1 to 5, characterized in that the washer (6) has at least one elastically compliant edge portion (22) which bears under pretension against one of the mutually facing surface portions (8) of the groove (9), the other surface portion (8) of the groove (9) being the abutment.

7. Adjustable fixing device according to Claim 6, characterized in that the washer (6) bears under pretension against the two surface portions (8) of the groove (9) with a respective elastically compliant portion (22).

8. Adjustable fixing device according to Claim 6 or 7, characterized in that the elastically compliant portion (22) of the washer (6) is formed by a resilient arm which runs in the longitudinal extent of the groove (9) and bears with its free end portion in a resilient manner against one of the mutually facing surface portions (8) of the groove (9), and in that the resilient arm (22) is formed by a slot (23) which is made in the washer (6), runs in the longitudinal extent of the groove (9) and is opened towards one edge of the washer (6).

9. Adjustable fixing device according to one of Claims 1 to 8, characterized in that at least one of the mutually facing surface portions (8) of the groove (9) is provided with latching marks (27) in which the washer (6) engages in a resilient manner with a projection (24), the latching marks (27) being designed such that they correspond to the projection (24) and, seen in the longitudinal extent of the groove (9), are arranged in series.

10. Adjustable fixing device according to Claim 9, characterized in that the projection (24) of the washer (6), with its portions merging into the narrow side surfaces (7) of the washer (6), tapers conically towards its free end and, seen transversely with respect to the bearing surface of the washer (6), is rounded at its free end and towards the washer (6) merges, with a curve (25), into the adjacent narrow side surface (7) of the washer (6).

11. Adjustable fixing device according to one of Claims 1 to 10, characterized in that the washer (6) is a limb of a sheet-metal strip (10) which is bent in a U-shape transversely to its longitudinal extent, is pushed onto the wall portion (3) and with its limbs (6 and 11) bears in a resilient manner against the non-facing wide side surfaces of the wall portion (3).

12. Adjustable fixing device according to Claim 11, characterized in that that limb (6) of the U-shaped sheet-metal strip (10) which serves as the washer bears against the base (5) of the groove (9) and the other limb (11) is arranged between the wall portion (3) of the support element and the body section (1).

13. Adjustable fixing device according to Claim 11 or 12, characterized in that the U-shaped sheet-metal strip (10) has a weakened cross-section along its bending line.

14. Adjustable fixing device according to one of Claims 1 to 13, characterized in that that limb (6) of the U-shaped sheet-metal strip (10) which forms the washer has an edge portion (12) which at its free end is bent away from the wall portion (3) and the side surface of which, which faces the wall portion (3), serves as a receiving slope.

15. Adjustable fixing device according to one of the above Claims 11 to 14, characterized in that the fixing bolt (17) passes through an opening (6) in that limb (11) of the U-shaped sheet-metal part (10) which bears against the body section (1), the external dimensions of which opening correspond to the external dimensions of the opening (15) in that limb (6) which serves as the washer.

16. Adjustable fixing device according to one of the above Claims 11 to 15, characterized in that the fixing bolt (17) in the longitudinal extent of the groove (9) is held in a manner free from play both in the opening (15) of that limb (6) which serves as the washer and in the opening (16) of the other limb.

17. Adjustable fixing device according to one of the above Claims 1 to 16, characterized in that the longitudinal extent of the groove (9) runs in the insertion direction, in which the vehicle lamp can be inserted into the body opening.

18. Adjustable fixing device according to one of the above Claims 1 to 17, characterized in that the central opening (15) in the washer (6) is a longitudinal slot which in its longitudinal extent runs transversely with respect to the longitudinal extent of the groove (9).

19. Adjustable fixing device according to Claim 18, characterized in that in any possible position of the washer (6) the fixing opening (4) in the wall portion (3), transverse to the longitudinal extent of the groove (9), is designed as long as the longitudinal slot (15) in the washer (6).

## Revendications

1. Dispositif de fixation ajustable pour un phare de véhicule qui peut être monté dans une ouverture de la carrosserie sur la face frontale ou à l'arrière d'un véhicule et qui peut être fixé par un raccordement vissé, de manière à ne pas pouvoir être déréglé, sur un élément de la carrosserie, avec un tronçon de paroi (3) d'un élément support fabriqué en matière plastique, présentant les caractéristiques suivantes :
- pour le boulon (17) de fixation du raccordement vissé, un orifice (4) de fixation est ménagé dans le tronçon de paroi (3) de l'élément support et il est prévu une rondelle métallique (6) avec un orifice (15) central, reposant sur une face latérale du tronçon de paroi (3),
- une face latérale du tronçon de paroi (3) présente une gorge (9) dans le fond (5) de laquelle est ménagé l'orifice (4) de fixation et dont les tronçons de surface (8) en vis-à-vis sont parallèles l'un à l'autre dans la région de l'orifice (4) de fixation,
caractérisé en ce que
- lorsque le raccordement vissé est desserré, le boulon (17) de fixation est maintenu pratiquement sans jeu sur la carrosserie (1), et la rondelle métallique (6) l'est sur le boulon (17) de fixation en sens longitudinal de la gorge (9),
- en sens longitudinal de la gorge (9), l'orifice (4) de fixation du tronçon de paroi (3) est réalisé plus grand que l'orifice (15) central de la rondelle métallique (6),
- lorsque le raccordement vissé est desserré, la rondelle métallique (6) prend appui avec ses surfaces latérales (7) étroites sur les tronçons de surfaces (8) de la gorge (9), parallèles les uns aux autres et en vis-à-vis, un blocage par coopération de force et/ou de forme apparaissant au niveau des surfaces d'appui (8) de telle sorte que lors du réglage du phare de véhicule, la rondelle métallique (6) peut être déplacée en sens longitudinal de la gorge (9) à partir d'une force minimum déterminée.

2. Dispositif de fixation ajustable selon la revendication 1, caractérisé en ce que la dimension de l'orifice (15) central de la rondelle métallique (6) en sens longitudinal de la gorge (9) correspond à la dimension extérieure du tronçon du boulon (17) de fixation qui la traverse.

3. Dispositif de fixation ajustable selon l'une ou l'autre des revendications 1 et 2, caractérisé en ce que le boulon (17) de fixation traverse une ouverture (20) de la carrosserie (1), dont la dimension extérieure correspond à la dimension extérieure du tronçon du boulon (17) de fixation qui la traverse.

4. Dispositif de fixation ajustable selon l'une quelconque des revendications 1 à 3, caractérisé en ce que le boulon (17) de fixation est vissé, avec l'extrémité de sa tige filetée (19) faisant saillie hors de l'ouverture (20) de la carrosserie, dans un écrou (21) qui est relié solidairement à la carrosserie (1), l'écrou (21) étant formé par un taraudage ménagé dans l'ouverture (20) de l'élément de carrosserie (1), ou bien, dans le cas d'une carrosserie (1) en tôle, l'écrou (21) étant par exemple un écrou à souder qui est soudé à la carrosserie (1).

5. Dispositif de fixation ajustable selon l'une quelconque des revendications 1 à 4, caractérisé en ce que la rondelle métallique (6) a des dimensions extérieures de forme rectangulaire et prend appui, avec deux faces latérales (7) étroites parallèles l'une à l'autre, sur les tronçons de surface (8) de la gorge (9) qui se font face.

6. Dispositif de fixation ajustable selon l'une quelconque des revendications 1 à 5, caractérisé en ce que la rondelle métallique (6) présente au moins un tronçon de bord (22) élastique souple qui prend appui sous précontrainte sur l'un des tronçons de surface (8) de la gorge (9) qui se font face, l'autre tronçon de surface (8) de la gorge (9) étant la contrebutée.

7. Dispositif de fixation ajustable selon la revendication 6, caractérisé en ce que la rondelle métallique (6) prend appui sous précontrainte sur les deux tronçons de surface (8) de la gorge (9) avec respectivement un tronçon (22) souple élastique.

8. Dispositif de fixation ajustable selon l'une ou l'autre des revendications 6 et 7, caractérisé en ce que le tronçon (22) souple élastique de la rondelle métallique (6) est formé par un bras élastique s'étendant en sens longitudinal de la gorge, lequel prend appui de manière élastique avec son extrémité libre sur un des tronçons de surface (8) de la gorge (9) en vis-à-vis, et en ce que le bras (22) élastique est formé par une fente (23) ménagée dans la rondelle métallique (6), ladite fente s'étendant en sens longitudinal de la gorge (9) et étant ouverte vers un bord de la rondelle métallique (6).

9. Dispositif de fixation ajustable selon l'une quelconque des revendications 1 à 8, caractérisé en ce qu'au moins un des tronçons de surface (8) de la gorge (9) en vis-à-vis est pourvu de marques d'encliquetage (27) dans lesquelles la rondelle métallique (6) s'engage élastiquement avec un doigt (24), les marques d'encliquetage (27) ayant une configuration correspondant à celle du doigt (24) et étant agencées les unes derrière les autres, vues en sens longitudinal de la gorge (9).

10. Dispositif de fixation ajustable selon la revendication 9, caractérisé en ce que le doigt (24) de la rondelle métallique (6), avec ses tronçons se transformant pour devenir les surfaces latérales (7) étroites de la rondelle métallique (6), se rétrécit coniquement vers son extrémité libre et, vu transversalement à la surface d'appui de la rondelle métallique (6), est arrondi à son extrémité libre, et vers la rondelle métallique (6), il se transforme par un arc (25) pour devenir la surface latérale (7) étroite adjacente de la rondelle métallique (6).

11. Dispositif de fixation ajustable selon l'une quelconque des revendications 1 à 10, caractérisé en ce que la rondelle métallique (6) est un bras d'une bande (10) de tôle repliée en forme de U transversalement au sens de sa longueur, ladite bande étant enfilée sur le tronçon de paroi (3) et prenant appui élastiquement avec ses bras (6 et 11) sur les côtés larges mutuellement opposés du tronçon de paroi (3).

12. Dispositif de fixation ajustable selon la revendication 11, caractérisé en ce que le bras (6) de la bande (10) de tôle en forme de U servant de rondelle métallique prend appui sur le fond (5) de la gorge (9) et en ce que l'autre bras (11) est agencé entre le tronçon de paroi (3) de l'élément support et la carrosserie (1)

13. Dispositif de fixation ajustable selon l'une ou l'autre des revendications 11 et 12, caractérisé en ce que la bande (10) de tôle en forme de U présente une section affaiblie sur sa ligne de pliage.

14. Dispositif de fixation ajustable selon l'une quelconque des revendications 1 à 13, caractérisé en ce que le bras (6) de la bande (10) de tôle en forme de U, qui forme la rondelle métallique, présente sur son extrémité libre un bord (12) replié à partir du tronçon de paroi (3), la face latérale dudit bord, qui est orientée vers le tronçon de paroi (3), servant de pente d'engagement.

15. Dispositif de fixation ajustable selon l'une quelconque des revendications précédentes 11 à 14, caractérisé en ce que le boulon (17) de fixation passe à travers un orifice (16) du bras (11) de la pièce (10) de tôle en forme U qui prend appui sur la carrosserie (1), dont les dimensions extérieures correspondent aux dimensions extérieures de l'orifice (15) du bras (6) servant de rondelle métallique.

16. Dispositif de fixation ajustable selon l'une quelconque des revendications précédentes 11 à 15, caractérisé en ce que le boulon (17) de fixation est maintenu sans jeu en sens longitudinal de la gorge (9), aussi bien dans l'orifice (15) du bras (6) servant de rondelle métallique que dans l'orifice (16) de l'autre bras.

17. Dispositif de fixation ajustable selon l'une quelconque des revendications 1 à 16, caractérisé en ce que le sens longitudinal de la gorge (9) s'étend dans la direction de mise en place suivant laquelle le phare peut être monté dans l'ouverture de la carrosserie.

18. Dispositif de fixation ajustable selon l'une quelconque des revendications 1 à 17, caractérisé en ce que l'orifice (15) central de la rondelle métallique (6) est une fente oblongue qui, dans son sens longitudinal, s'étend transversalement au sens longitudinal de la gorge (9).

19. Dispositif de fixation ajustable selon la revendication 18 caractérisé en ce qu'à toutes les positions possibles de la rondelle métallique (6) l'orifice (4) de fixation dans le troncon de paroi (3), transversale au sens longitudinal de la gorge (9), est realisé aussi long que la fente oblongue (15) de la rondelle métallique (6).
